# EUROPEAN PATENT SPECIFICATION

(11) **EP 3 670 212 B1**
(45) Date of publication and mention of the grant of the patent: **15.03.2023**
(21) Application number: 18845568.7
(22) Date of filing: 06.08.2018
(51) Int. Cl.: B60C 19/00, B60C 23/06, B60C 5/00

(54) **PNEUMATIC TIRE**
LUFTREIFEN
PNEUMATIQUE

(30) Priority: 14.08.2017 JP 2017156453
(43) Date of publication of application: 24.06.2020
(73) Proprietor: Bridgestone Corporation, Tokyo 104-8340 (JP)
(72) Inventor: SHIBATA, Masanao, Tokyo 104-8340 (JP); WATANABE, Jun, Tokyo 104-8340 (JP); SUKEGAWA, Shin, Tokyo 104-8340 (JP); OHARA, Takayuki, Tokyo 104-8340 (JP); YAMAGUCHI, Suguru, Tokyo 104-8340 (JP); HORI, Hiroki, Tokyo 104-8340 (JP); MITSUDA, Sho, Tokyo 104-8340 (JP)
(74) Representative: Marks & Clerk LLP
(86) International application number: PCT/JP2018/029430
(87) International publication number: WO 2019/035383

(56) References cited:
- DE-A1-102005 023 974
- DE-A1-102015 217 479
- JP-A- 2004 276 809
- JP-A- 2004 291 855
- JP-A- 2004 306 673
- JP-A- 2007 290 699
- JP-A- 2008 080 846
- JP-A- 2009 137 497
- JP-A- 2010 125 920
- JP-A- 2010 125 920
- JP-A- 2010 179 888
- JP-A- 2013 112 342
- JP-B2- S 621 899
- US-A1- 2007 146 124
- US-A1- 2009 151 829
- US-A1- 2014 246 133

## Description

### TECHNICAL FIELD

The present invention relates to a pneumatic tire.

### BACKGROUND

Configurations have been conventionally known which have, attached to tire inner surfaces or embedded in tires, communication devices, such as a sensor for detecting internal statuses of the tire (e.g., the air pressure of the tire) or an RF tag having a storage unit capable of storing unique identification information of the tire. For example, the statuses of tires during driving can be determined by a sensor serving as a communication device, or information of the tires retrieved from a storage unit in an RF tag serving as a communication device may be utilized for maintenance service or other services.

PTL-1 discloses a configuration in which a radio tag is attached to a sponge material fixed to an inner surface of a tire. PTL-2 discloses a band-like sheet fixed to an inner surface of a tire, formed in a multilayered structure comprising a first layer composed of a first sponge material having an excellent sound absorption characteristic, and a second layer composed of a second sponge material having an excellent characteristic of preventing reflection of sounds. Attention is also drawn to the disclosures of JP2010-125920A and US2007/146124A1.

### CITATION LIST

### Patent Literature

PTL-1: JP2007176403A
PTL-2: JP3621899B

### SUMMARY

### (Technical Problem)

As described in PTL-1 and PTL-2, a sponge material provided in a tire cavity defined by a pneumatic tire and a rim reduces cavity resonance by absorbing sounds by converting the energy of the sounds that may otherwise resonate inside the cavity into energy in other forms, for example.

In addition, PTL-1 discloses protection of a radio tag serving as a communication device from impacts, vibrations, and the like, by means of a sponge material attached to the radio tag. In the case of a sensor that detects a displacement of the tire inner surface or a certain physical quantity, such as the acceleration, which is calculable based on the displacement of the tire inner surface, however, buffering impacts on a tire and vibrations of the tire with a sponge material attached to the sensor is not desirable for improving the detection accuracy because a higher detection accuracy is achieved by more precise inputs about energies of the impacts and vibrations to the sensor.

On the other hand, a member composed of a quite hard sponge material attached to a sensor, such as an accelerometer, may lower the cavity resonance reduction characteristic described above.

Accordingly, it could be helpful to provide a pneumatic tire that retains a sensor in such a manner to prevent any reduction in the detection accuracy of the sensor, while assuring the cavity resonance reduction characteristic, even for a sensor for detecting a displacement of the tire inner surface or a certain physical quantity calculable based on the displacement of the tire inner surface.

### (Solution to Problem)

A pneumatic tire in accordance with the present invention comprises a first sound damper fixed to a tire inner surface and being made of a sponge material; a second sound damper disposed on an inner-tire space side of the first sound damper, and being made of a sponge material; and a sensor retained to at least the first sound damper, the sensor being configured to detect a displacement of the tire inner surface or a physical quantity calculable based on the displacement of the tire inner surface, wherein the first sound damper has a hardness greater than a hardness of the second sound damper, the "hardness" being defined as a value measured in accordance with the Method A in Section 6.4 of the test methods described in "Hardness Tests" in Section 6 of JIS K6400-2 (2012).

### (Advantageous Effect)

In accordance with the present invention, a pneumatic tire is provided which retains a sensor in such a manner to prevent any reduction in the detection accuracy of the sensor, while assuring the cavity resonance reduction characteristic, even for a sensor for detecting a displacement of the tire inner surface or a certain physical quantity calculable based on the displacement of the tire inner surface.

### BRIEF DESCRIPTION OF THE DRAWINGS

In the accompanying drawings:
FIG. 1 is a cross-sectional diagram of a cross-section along the tire width direction of an assembly including a pneumatic tire as a first embodiment of the present invention;
FIG. 2 is a tire widthwise cross-sectional diagram solely illustrating the pneumatic tire illustrated in FIG. 1;
FIG. 3 is an enlarged cross-sectional diagram illustrating a tread of the pneumatic tire in FIG. 2 in an enlarged view;
FIG. 4 is a tire circumferential cross-sectional diagram solely illustrating the pneumatic tire illustrated in FIG. 1;
FIG. 5 is a diagram illustrating a variation to the sound damper illustrated in FIG. 3; and
FIG. 6 is a diagram illustrating a variation to the sound damper illustrated in FIG. 3; and
FIG. 7 is a tire widthwise cross-sectional diagram solely illustrating a pneumatic tire as a second embodiment of the present invention, illustrating a tread in an enlarged view.

### DETAILED DESCRIPTION

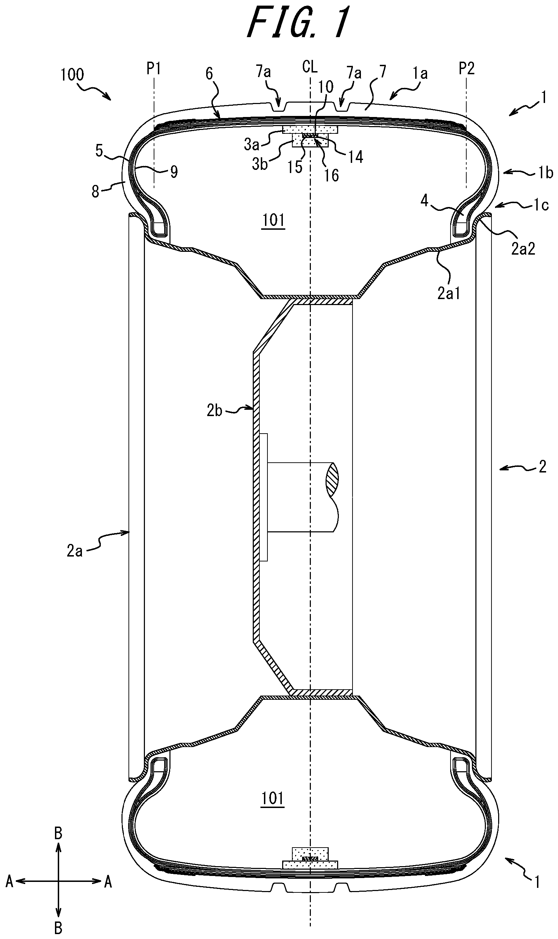

Hereinafter, embodiments of a pneumatic tire according to the present invention will be exemplified and described with reference to FIGS. 1 to 7. In the drawings, the like members or positions are denoted by the same reference symbols.

### <<First Embodiment>>

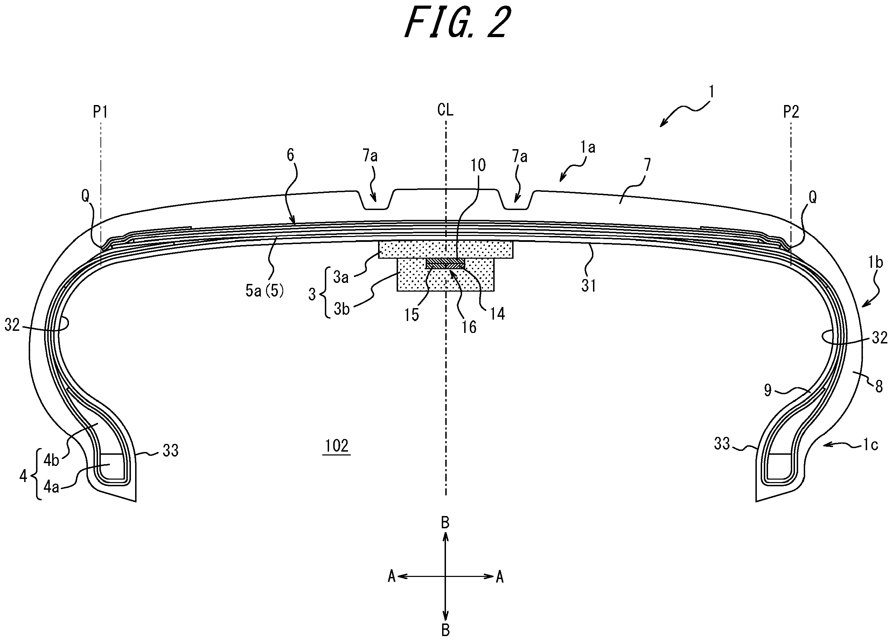

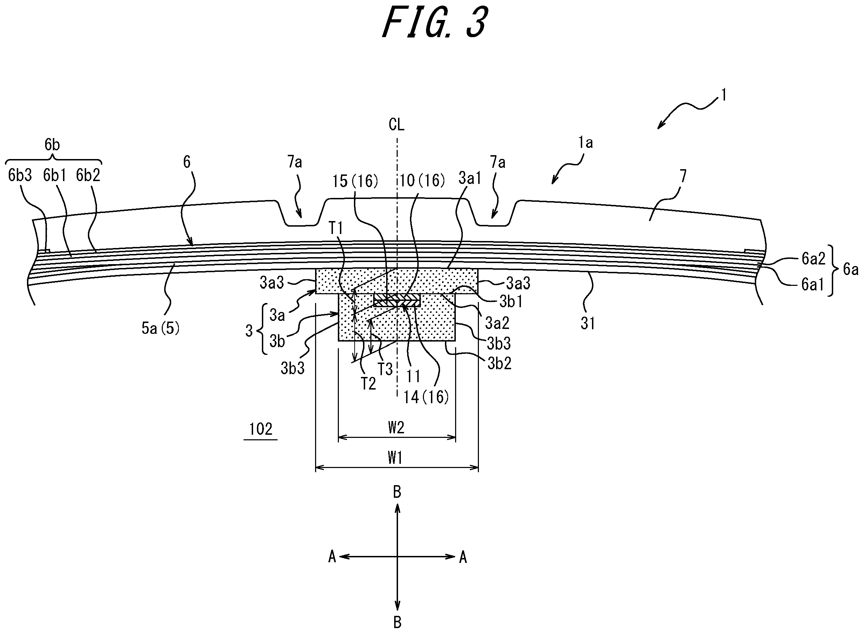

FIG. 1 is a diagram illustrating an assembly 100 including a pneumatic tire 1 (hereinafter simply referred to as the "tire 1") and a rim 2. Specifically, FIG. 1 is a cross-sectional diagram illustrating a cross-section of the assembly 100 on a plane that encompasses the tire rotation axis and is parallel to the tire width direction A (hereinafter referred to as "tire widthwise cross-sectional diagram"). FIG. 2 is a tire widthwise cross-sectional diagram solely illustrating the tire 1 illustrated in FIG. 1. FIG. 3 is an enlarged cross-sectional illustrating a tread 1a that is a part of the tire 1 in FIG. 2 in an enlarged view. In other words, FIGS. 2 and 3 illustrate the tire 1 that is not mounted on the rim 2.

As illustrated in FIG. 1, the tire 1 is mounted on the rim 2 in the assembly 100. In the assembly 100, the tire cavity surface defined by the inner surface of the tire 1 (hereinafter referred to as the "tire inner surface") and the outer surface of the rim 2 (hereinafter referred to as "rim outer surface") define an annular tire cavity 101. As illustrated in FIG. 2, in a tire widthwise cross-sectional view, the space that is defined only by tire inner surface and is open on the inner side in the tire radial direction B is referred to as "tire internal space 102".

### <Rim 2>

The rim 2 includes a rim main body 2a and a disc 2b. Beads 1c (described later) of the tire 1 are to be mounted on the rim main body 2a. The disc 2b supports the rim main body 2a, and the disc 2b is to be coupled to the axle of a vehicle. Although the rim 2 of the present embodiment is two-piece metal wheel rim, this is not limiting and the rim 2 may be a one-piece rim or may have any other configuration. The rim main body 2a includes a rim sheet 2a1 and rim flanges 2a2. Bead members 4 (described later) of the tire 1 are to be seated on outer sides of the rim sheet 2a1 in the tire radial direction B. The rim flanges 2a2 protrude outwardly in the tire radial direction B from the corresponding ends of the rim sheet 2a1 in the tire width direction A.

### <Tire 1>

The tire 1 includes a tread 1a, a pair of side walls 1b extending inwardly in the tire radial direction B from corresponding ends of the tread 1a in the tire width direction A, and a pair of beads 1c provided at the respective ends of the side walls 1b on the inner side in the tire radial direction B. The tire 1 of the present embodiment is a tubeless radial tire for a passenger vehicle. As used herein, the term "tread 1a" refers to a section (except for the beads 1c) extending between two planes P1 and P2 that are parallel to the tire radial direction B, and intersects respective belt ends Q (see FIG. 2) located outermost of a belt 6 (described later) in the tire width direction A. The term "beads 1c" refers to sections where bead members 4 (described later) are disposed in the tire radial direction B. The term "side walls 1b" refers to the sections extending between the tread 1a and the respective beads 1c.

The tire inner surface defining the tire cavity 101 has an inner surface 31 of the tread 1a (hereinafter referred to as the "tread inner surface 31 "), inner surfaces 32 of the side walls 1b (hereinafter referred to as the "side wall inner surfaces 32"), and inner surfaces 33 of the beads 1c (hereinafter referred to as the "bead inner surfaces 33").

The tire 1 includes a sound damper 3, bead members 4, a carcass 5, a belt 6, a tread rubber 7, side rubbers 8, an inner liner 9, and a sensor 10.

### [Sound damper 3]

The sound damper 3 includes a first sound damper 3a and a second sound damper 3b. The first sound damper 3a is made of a sponge material. The first sound damper 3a is fixed to the tire inner surface. The second sound damper 3b is made of a sponge material. The second sound damper 3b is disposed on the tire internal space 102 side of the first sound damper 3a (which is the same side as the tire cavity 101 side in the assembly 100 in FIG. 1). The first sound damper 3a and the second sound damper 3b made of the sponge materials provided on the tire cavity 101 can reduce cavity resonance inside the tire cavity 101.

As used herein, the term "tire internal space side of the first sound damper" refers to the side where the tire internal space resides relative to the first sound damper, and refers to not only the surface opposite to a fixed surface, which is fixed to the tire inner surface of the first sound damper. More specifically, in the present embodiment, the tire internal space 102 side of the first sound damper 3a includes the inner side of the first sound damper 3a in the tire radial direction B (the bottom side in FIG. 3) and the two sides of the first sound damper 3a in the tire width direction A (the left and right sides in FIG. 3), in the tire widthwise cross-sectional view illustrated in FIG. 3. Although the second sound damper 3b of the present embodiment is disposed inward relative to the first sound damper 3a in the tire radial direction B which represents the tire internal space 102 side of the first sound damper 3a, this configuration is not limiting. The second sound damper may be disposed on one or both of the sides of the first sound damper 3a in the tire width direction A as the tire internal space 102 side of the first sound damper 3a.

The first sound damper 3a has a hardness greater than a hardness of the second sound damper 3b. The "hardness" as used herein is defined as a value measured in accordance with the Method A in Section 6.4 of the test methods described in "Hardness Tests" in Section 6 of JIS K6400-2 (2012).

As will be described below, the sensor 10 is retained to at least the first sound damper 3a. Here, "the sensor is retained to the first sound damper" refers to the situation in which the position of the sensor relative to the first sound damper is fixed. For example, a configuration in which the sensor is fixed to the first sound damper with an adhesive or the like is one form of the aforementioned retaining configuration. As another example, a configuration in which the sensor is accommodated in a recess formed in the first sound damper such that the frictional force or the like against an inner wall defining the recess keeps the sensor not to move with respect to the first sound damper is another form of the aforementioned retaining configuration. It is sufficient that the position of the sensor relative to the first sound damper is fixed as described above, and the specific configuration is not limited to the retaining configuration of the present embodiment. Note that the sensor 10 of the present embodiment is fixed to the first sound damper 3a with an adhesive. Furthermore, the sensor 10 of the present embodiment is fixed not only to the first sound damper 3a but also to the second sound damper 3b, with an adhesive.

As will be described later, the sensor 10 is configured to detect a displacement of the tire inner surface or a physical quantity calculable based on the displacement of the tire inner surface. More specifically, the sensor 10 of the present embodiment is an accelerometer. Configuring the first sound damper 3a made of the sponge to be harder can prevent absorptions by the first sound damper 3a of impacts, vibrations, and the like from the tire inner surface side of the tire 1. This facilitates transmission of the energies of impacts and vibrations to the sensor 10, thereby improving the detection accuracy of the sensor 10.

In contrast, configuring the second sound damper 3b made of the sponge material to be softer can provide a characteristic to cause sounds to be irregularly reflected by the surface facing the tire internal space 102 which has a high foaming magnification and includes a large number of irregularities formed thereon (hereinafter, this characteristic is referred to as the "diffuse reflection characteristic"). Such an diffuse reflection characteristic can reduce resonance inside the tire cavity 101. This can lead to an increase in the cavity resonance reduction characteristic. In other words, the second sound damper 3b made of a sponge material that is softer than the sponge material of the first sound damper 3a can improve the cavity resonance reduction characteristic of the second sound damper 3b as compared to a configuration in which the second sound damper is made of the same sponge material as or a harder sponge material than that of the first sound damper 3a.

In this manner, the aforementioned hardness relationship of the hardnesses of the first sound damper 3a and the second sound damper 3b and the configuration in which the sensor 10 is retained to the first sound damper 3a can retain the sensor 10 in such a manner to prevent any reduction in the detection accuracy of the sensor 10, while assuring the cavity resonance reduction characteristic, even when the sensor 10 is configured to detect a displacement of the tire inner surface or a certain physical quantity calculable based on the displacement of the tire inner surface.

Furthermore, the sensor 10 of the present embodiment is positioned between the first sound damper 3a and the second sound damper 3b. As a result, the second sound damper 3b serves as a cover, so that detachment of the sensor 10 to enter the tire internal space 102 is prevented further effectively.

The first sound damper 3a and the second sound damper 3b made of the sponge materials preferably range from 25 N to 55 N and satisfy the hardness relationship described above. Particularly, the hardness of the first sound damper 3a preferably ranges from 35 N to 45 N. The hardness of the second sound damper 3b preferably ranges from 25 N to 40 N.

The sponge materials composing the first sound damper 3a and the second sound damper 3b are spongy porous structures, and include so-called sponge of a foamed rubber or synthetic resin with open cells, for example. In addition to the sponge described above, the sponge materials include a web-like material in which animal fibers, plant fibers, synthetic fibers, or the like are intertwined to form an integral structure. Note that the "porous structures" described above are not limited to structures with open cells, and include structures with closed cells. In terms of the sound absorption characteristic, however, structures with open cells are preferable.

Sponge materials as described above have voids formed thereon or therein, and the voids absorb sounds by converting vibration energies of the air vibrations into thermal energies. This reduces cavity resonance inside the tire cavity. The sponge material can reduce cavity resonance inside the tire cavity 101 by the above-described diffuse reflection characteristic achieved by a large number of irregularities on the surface facing the tire cavity 101 of the sponge material, in addition to the cavity resonance reduction achieved by sound absorption. The cavity resonance reduction characteristic by means of such an diffuse reflection characteristic can be achieved by increasing the foaming magnification of the sponge material.

The foaming magnifications of the first sound damper 3a and the second sound damper 3b made of the sponge materials preferably range from 300% to 3000% and satisfy the hardness relationship described above.

Examples of the material of the sponge materials include synthetic resin sponges, such as an ether-based polyurethane sponge, an ester-based polyurethane sponge, and a polyethylene sponge; and rubber sponges such as a chloroprene rubber sponge (CR sponge), an ethylene propylene rubber sponge (EPDM sponge), and a nitrile rubber sponge (NBR sponge), for example. In terms of properties, including the sound damping characteristic, light weight, the adjustability of foaming, and the durability, polyurethane-based sponges, including an ether-based polyurethane sponge, or polyethylene-based sponges are preferably used.

Additionally, an excessively high specific gravity of the sponge material is likely to increase the tire weight, whereas an excessively low specific gravity tends to reduce the cavity resonance reduction effect. Thus, the specific gravity of the sponge materials preferably ranges from 0.005 to 0.06, more preferably from 0.01 to 0.04, and even more preferably from 0.01 to 0.03, in view of balancing an increase in the tire weight and the cavity resonance reduction effect.

Furthermore, the volume of the sound damper 3, which is the sum of the volumes of the first sound damper 3a and the second sound damper 3b, is preferably 0.4% to 20% of the total volume of the tire cavity 101. The volume of the sound damper 3 of 0.4% or more relative to the total volume of the tire cavity helps to achieve a desired cavity resonance reduction effect (e.g., a reduction of 2 dB or higher). The volume of the sound damper 3 is more preferably 1% or more, even more preferably 2% or more, and particularly preferably 4% or more of the total volume of the tire cavity 101. On the other hand, the volume of the sound damper 3 exceeding 20% of the total volume of the tire cavity 101 does not satisfactorily improve the cavity resonance reduction effect. Rather, the weight balance of the assembly 100 may be compromised. From such a perspective, the volume of the sound damper 3 is more preferably 16% or less and even more preferably 10% or less of the total volume of the tire cavity 101.

Further details of the first sound damper 3a and the second sound damper 3b will be described late.

### [Bead member 4]

The bead members 4 are embedded in the corresponding beads 1c. Each bead member 4 includes a bead core 4a and a bead filler 4b that is made of a rubber and is located outward relative to the bead core 4a in the tire radial direction B. The bead core 4a includes a plurality of bead wires, each bead wire being coated with a rubber. The bead wires are formed from steel cords. The steel cords may be composed of steel monofilaments or twisted wires, for example. Alternatively, other materials, such as organic fibers or carbon fibers, may also be used as the bead wires.

### [Carcass 5]

The carcass 5 spans across the pair of beads 1c, more specifically, across the bead cores 4a of the pair of bead members 4, and extends toroidally. The carcass 5 has at least a radial structure.

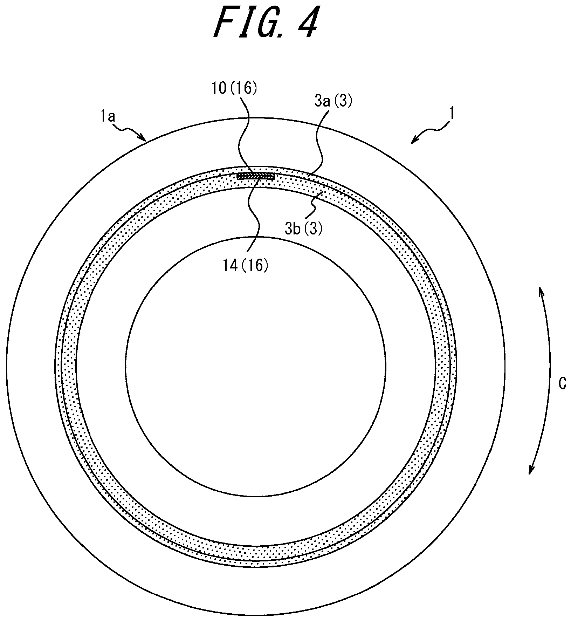

The carcass 5 is constructed from one or more (one in this embodiment) carcass plies 5a, and each carcass ply is composed from carcass cords that are arranged at angles of, for example, 75° to 90° with respect to the tire circumferential direction C (see FIG. 4). The carcass ply 5a includes a ply main body extending between the pair of bead cores 4a and carcass folds, each carcass fold extending from the ply main body and being folded around the corresponding bead core 4a from the inner side toward the outer side in the tire radial direction A. Between the ply main body and each ply fold, a bead filler 4b extends outward from the bead core 4a in the tire radial direction B in a tapered shape. Although polyester cords are employed as the carcass cords composing the carcass ply 5a in the present embodiment, organic fiber cords of nylon, rayon, aramid, or the like may be employed and even steel cords may also be employed as required. In addition, two or more carcass plies 5a may be provided.

### [Belt 6]

The belt 6 includes one or more (five in this embodiment) belt layers disposed outward with respect to the crown of the carcass 5 in the tire radial direction B. Specifically, as illustrated in FIG. 3, the belt 6 of the present embodiment includes an inclined belt 6a and a circumferential belt 6b.

As illustrated in FIG. 3, the inclined belt 6a includes one or more (two in this embodiment) inclined belt layers disposed outward with respect to the crown of the carcass 5 in the tire radial direction B. More specifically, the inclined belts 6a of the present embodiment include a first inclined belt layer 6a1 and a second inclined belt layer 6a2, which are overlapped with one another in the tire radial direction B. Each of the first inclined belt layer 6a1 and the second inclined belt layer 6a2 is constituted from a belt ply composed of steel cords as metallic belt cords that are inclined at angles of 10° to 40° with respect to the tire circumferential direction C (see FIG. 4). The two belt plies are overlapped with one another such that their incline directions are different from each other. As a result, the belt cords of the belt plies cross each other, which enhances the rigidity of belts, thereby reinforcing the tread 1a substantially in the entire width thereof by the tagger effect. In the present embodiment, the second inclined belt layer 6a2 disposed outward in the tire radial direction B is formed narrower than the first inclined belt layer 6a1 disposed inward in the tire radial direction B. As a result, in the present embodiment, the first inclined belt layer 6a1 disposed inward in the tire radial direction B extends more outward in the tire width direction A than the second inclined belt layer 6a2 disposed outward in the tire radial direction B.

Alternatively, the first inclined belt layer disposed inward in the tire radial direction B may be formed narrower than the second inclined belt layer disposed outward in the tire radial direction B. In other words, the second inclined belt layer disposed outward in the tire radial direction B may extend more outward in the tire width direction A than the first inclined belt layer disposed inward in the tire radial direction B. The inclined belt 6a may be composed of only one belt layer, or may be composed of three or more belt layers.

As illustrated in FIG. 3, the circumferential belt 6b includes one or more (three in this embodiment) circumferential belt layers disposed outward with respect to the inclined belt 6a in the tire radial direction B. More specifically, the circumferential belt 6b includes a first circumferential belt layer 6b 1, a second circumferential belt layer 6b2, and a third circumferential belt layer 6b3, which are overlapped with one another in the tire radial direction B. Each of the first circumferential belt layer 6b 1, the second circumferential belt layer 6b2, and the third circumferential belt layer 6b3 is constituted from a belt ply that is composed of nylon cords as belt cords of organic fibers spirally wound about the rotation axis of the tire at an angle of 10° or less, preferably 5° or less with respect to the tire circumferential direction C (see FIG. 4).

While the circumferential belt 6b of the present embodiment is configured from the three circumferential belt layers disposed outward with respect to the inclined belt 6a in the tire radial direction B, this configuration is not limiting. The circumferential belt 6b may be a circumferential belt composed of less than three or more than more than three circumferential belt layers In addition, the length relationship of the lengths in the tire width direction A of the circumferential belt layers, the length relationship of the length in the tire width direction A of each circumferential belt layer and each inclined belt layer, the positional relationship of the positions of the belt ends of the circumferential belt layers, the positional relationship of the positions of the belt ends of each circumferential belt layer and each circumferential belt layer, and the like are not limited to those in the configuration of the present embodiment. They may be appropriately designed according to the desired characteristics, and are not limited to belt structures of the present embodiment.

### [Tread rubber 7 and side rubbers 8]

The tread rubber 7 defines the outer surface of the tread 1a in the tire radial direction B (hereinafter, referred to as a "tread outer surface"), and has a tread pattern including circumferential grooves 7a extending in the tire circumferential direction C (see FIG. 4) and widthwise grooves (not illustrated) extending in the tire width direction A, formed on the tread outer surface. The side rubbers 8 define the outer surfaces of the sidewall portion 1b in the tire width direction A and are formed integrally with the above tread rubber 7.

### [Inner liner 9]

The inner liner 9 is overlapped on the inner surface of the carcass 5, and is made of a butyl-based rubber having a low air permeability. Note that a "butyl-based rubber" refers to a butyl rubber and a halogenated derivative thereof, i.e., halogenated butyl rubber. The first sound damper 3a is fixed to the inner liner 9 with a double-sided adhesive tape, an adhesive, or the like. For improving the adhesion, the region of the inner liner 9 to which the first sound damper 3a is fixed may be a formed as a low-butyl content region where the content of the butyl-based rubber is lower than that in the region to which the first sound damper 3a is not fixed.

### [Sensor 10]

As set forth above, the sensor 10 is retained to at least the first sound damper 3a. Furthermore, the sensor 10 of the present embodiment is positioned between the first sound damper 3a and the second sound damper 3b.

The sensor 10 is configured to detect a displacement of the tire inner surface or a physical quantity calculable based on the displacement of the tire inner surface. Examples of the predetermined physical quantity calculable based on a displacement of the tire inner surface include the speed of the tire inner surface that is calculable by differentiating the displacement of the tire inner surface by time, and the acceleration of the tire inner surface that is calculable by further differentiating the resultant speed by time, for example. The sensor 10 of the present embodiment is an accelerometer that can detect the acceleration in the tire radial direction B acting on the tread inner surface 31 of the tire inner surface.

The sensor 10 of the present embodiment is included in a communication device 16 including a communication unit 14 that is wirelessly communicative with an external device external to the tire, such as a reader/writer, for example. In other words, in the present embodiment, the communication device 16 includes the sensor 10 and the communication unit 14. The communication unit 14 can transmit, to an external device, a detected value detected by the sensor 10 and/or a calculated value calculated based on the detected value detected by the sensor 10. This makes the detected values or the like by the sensor 10 to be available from outside the tire 1.

Additionally, the communication device 16 of the present embodiment further includes a storage unit 15 that is capable of storing detected values detected by the sensor 10, or calculated values calculated based on detected values detected by the sensor 10. In addition to detected values and the like of the sensor 10 described above, the storage unit 15 may be configured to store detected values from other sensors and various types of information about the tire 1, such as identification information of the tire 1. The storage unit 15 is constituted by a memory such as a RAM or ROM, for example. The storage unit 15 enables storage of information, such as detected values by the sensor 10, and also enables the information to be read and utilized, where necessary.

Although the communication device 16 of the present embodiment illustrated in FIG. 3 has the configuration in which the communication unit 14 and the storage unit 15 are overlapped with each other inward to the sensor 10 in the tire radial direction B, the positional relationship between the sensor 10 and the communication unit 14 and the storage unit 15 is limited to that in the configuration in this embodiment. For example, the communication unit 14 and the storage unit 15 can be disposed on the tire internal space 102 at a position separate from the sensor 10 so as to be wirelessly or wiredly communicative with the sensor 10. Thus, rather than the entire communication device 16, only the sensor 10 may be retained to the first sound damper 3a or may be retained between the first sound damper 3a and the second sound damper 3b.

It is sufficient that the communication device 16 including the sensor 10 is retained to at least the first sound damper 3a such that the position of the sensor 10 relative to the first sound damper 3a is fixed. The communication device 16 including the sensor 10 of the present embodiment is fixed to the first sound damper 3a with an adhesive or the like, for example. Furthermore, the communication device 16 including the sensor 10 of the present embodiment is fixed not only to the first sound damper 3a but also to the second sound damper 3b, with an adhesive. With such a configuration, the communication device 16 including the sensor 10 is also united with the second sound damper 3b. This can prevent communication device 16 from repeatedly colliding with the second sound damper 3b due to impacts, vibrations, and the like while the tire rolls on the road surface. This prevent any reduction in the detection accuracy of the sensor 10 caused by impacts or the like of collisions between the communication device 16 and the second sound damper 3b.

### [First sound damper 3a and second sound damper 3b]

Next, the configurations of the first sound damper 3a and the second sound damper 3b will be described in detail.

FIG. 4 is a cross-sectional diagram solely illustrating the tire 1 along the tire equator plane CL (hereinafter referred to as a "tire circumferential cross-sectional diagram"). As illustrated in FIG. 4, the first sound damper 3a and the second sound damper 3b of the present embodiment are band-shaped members extending along the entire tire circumference C, and have substantially the same cross-sectional outer shapes in the tire widthwise cross-sectional diagram (see FIG. 2, etc.) at any position in the tire circumferential direction C. The first sound damper 3a and the second sound damper 3b may be provided along only a part of the tire circumference C as long as the sensor 10 is retained therebetween. The first sound damper 3a and the second sound damper 3b, however, are preferably provided along the entire tire circumference C as in the present embodiment. Such a configuration can increase the volume of the sponge materials inside the tire cavity 101, thereby further reducing cavity resonance inside the tire cavity 101, as compared to a configuration in which the first sound damper and the second sound damper are provided along only a part of the tire circumference C.

In the present embodiment, each of the first sound damper 3a and the second sound damper 3b has a flat shape in the tire widthwise cross-sectional view (see FIG. 3 etc.).

The first sound damper 3a is fixed to the tread inner surface 31 of the tire inner surface, and has a flat shape (see FIG. 3 etc.) in which the maximum length W1 thereof in the direction along the tire inner surface (which substantially equals the maximum length in the tire width direction A in this embodiment) is greater than the maximum thickness T1 thereof in the orthogonal direction orthogonal to the tire inner surface (which substantially equals the maximum length in the tire radial direction B in this embodiment), in the tire widthwise cross-sectional view (see FIG. 3 etc.). Note that the thickness of the first sound damper 3a is defined by the length of the first sound damper 3a in the orthogonal direction orthogonal to the tire inner surface.

It is assumed that the maximum thickness T1 and the maximum length W1 of the first sound damper 3a described above are defined as those measured under a condition in which the first sound damper 3a and the second sound damper 3b are attached to a tire 1 and the tire 1 is not mounted on a rim (at normal temperature and under normal pressure). The maximum thickness T1 of the first sound damper 3a of the present embodiment ranges from 5 mm to 45 mm, for example.

More specifically, the first sound damper 3a of the present embodiment has an approximate rectangular cross-sectional outer shape in the tire widthwise cross-sectional view (see FIG. 3 etc.). The first sound damper 3a of the present embodiment includes, in the tire widthwise cross-sectional view (see FIG. 3 etc.), a fixed surface 3a1 that extends along the tire inner surface and is fixed to the tire inner surface, an internal surface 3a2 that is opposite to the fixed surface 3a1 and extends substantially parallel to the fixed surface 3a1 along the tire inner surface, and edge surfaces 3a3 that are continuous with the fixed surface 3a1 and the internal surface 3a2, are located on respective sides in the direction along the tire inner surface (the direction substantially equal to the tire width direction A in the present embodiment), and extend in the orthogonal direction orthogonal to the tire inner surface.

The second sound damper 3b is overlapped on the surface of the first sound damper 3a on the tire internal space 102 side. The second sound damper 3b has a flat shape in which the maximum length W2 thereof is greater than the maximum thickness T2 thereof in the tire widthwise cross-sectional view (see FIG. 3 etc.). As used herein, the thickness of the second sound damper 3b is defined by the length of the second sound damper 3b in the direction orthogonal to the part of the surface of the first sound damper 3a on the tire internal space 102 side on which the second sound damper 3b is overlapped. The maximum thickness T2 of the second sound damper 3b is defined by the maximum value of the length of the second sound damper 3b in the direction orthogonal to the part of the surface of the first sound damper 3a on the tire internal space 102 side on which the second sound damper 3b is overlapped (a part of the internal surface 3a2 in the present embodiment). Note that the maximum thickness T2 of the second sound damper 3b of the present embodiment is equal to the maximum length in the orthogonal direction orthogonal to the tire inner surface, and is substantially equal to the maximum length in the tire radial direction B. The length of the second sound damper 3b is defined by the length of the second sound damper 3b in the direction along the surface of the first sound damper 3a. The maximum length W2 of the second sound damper 3b is defined by the maximum value of the length of the second sound damper 3b in the direction along the surface of the first sound damper 3a. The maximum length W2 of the second sound damper 3b of the present embodiment is equal to the maximum length thereof in the direction along the tire inner surface, and is substantially equal to the maximum length in the tire width direction A.

Similarly to the maximum thickness T1 and the maximum length W1 of the first sound damper 3a, it is assumed that the maximum thickness T2 and the maximum length W2 of the second sound damper 3b described above are defined as those measured under a condition in which the first sound damper 3a and the second sound damper 3b are attached to a tire 1 and the tire 1 is not mounted on a rim (at normal temperature and under normal pressure).

The second sound damper 3b of the present embodiment covers at least a part of the internal surface 3a2 of the first sound damper 3a (only a part of the internal surface 3a2 in this embodiment), in the tire widthwise cross-sectional view (see FIG. 3 etc.). The communication device 16 including the sensor 10 is located between the internal surface 3a2 of the first sound damper 3a and the second sound damper 3b and is retained to at least the first sound damper 3a. Such a configuration can prevent any affects on detected values by the sensor 10 of vibrations in the direction (which is the direction substantially equivalent to the tire width direction A in this embodiment) orthogonal to the thickness direction of the first sound damper 3a (the orthogonal direction orthogonal to the tire inner surface, which is substantially equivalent to the tire radial direction B in the present embodiment) with respect to the sensor 10, as compared to the configuration for retaining the sensor 10 between the edge surface 3a3 and the second sound damper 3b of the first sound damper 3a. As a result, the sensor 10 can more accurately detect a displacement of in the thickness direction of the first sound damper 3a, or a predetermined physical quantity (e.g., the speed or the acceleration, etc.) in the thickness direction of the first sound damper 3a, which is calculable based on this displacement.

More specifically, the second sound damper 3b of the present embodiment has an approximate rectangular cross-sectional outer shape in the tire widthwise cross-sectional view (see FIG. 3 etc.). The second sound damper 3b of the present embodiment includes, in the tire widthwise cross-sectional view (see FIG. 3 etc.), an opposing surface 3b1 that faces the internal surface 3a2 of the first sound damper 3a and extends along the tire inner surface, a free surface 3b2 that is opposite to the opposing surface 3b1 and extends substantially parallel to the opposing surface 3b 1 along the tire inner surface, and edge surfaces 3b3 that are continuous with the opposing surface 3b 1 and the free surface 3b, are located on respective sides in the direction along the tire inner surface (the direction substantially equal to the tire width direction A in the present embodiment), and extend in the orthogonal direction orthogonal to the tire inner surface.

Here, in the present embodiment, the maximum thickness T1 of the first sound damper 3a is equal to or less than the minimum thickness T3 of the second sound damper 3b. More specifically, the maximum thickness T1 of the first sound damper 3a of the present embodiment is smaller than the minimum thickness T3 of the second sound damper 3b.

A reduction in the maximum thickness T1 of the first sound damper 3a facilitates transmissions of impacts and vibrations from the tire inner surface side to the sensor 10 retained to the first sound damper 3a. This improves the detection accuracy of the sensor 10 that detects a displacement of the tire inner surface, or a predetermined physical quantity calculable based on the displacement of the tire inner surface. On the other hand, an increase in the minimum thickness T3 of the second sound damper 3b enhances the cavity resonance reduction characteristic. Thus, by setting the maximum thickness T1 of the first sound damper 3a to be equal or smaller than the minimum thickness T3 of the second sound damper 3b, any decrease in the detection accuracy of the sensor 10 is prevented more effectively, while increasing the cavity resonance reduction characteristic.

Note that, since the thickness of the first sound damper 3a of the present embodiment is uniform, the thickness of the first sound damper 3a at any location represents the aforementioned maximum thickness T1. In addition, the thickness of the second sound damper 3b of the present embodiment becomes the smallest where a recess 11 (described later) is provided, and is uniform at the location other than where the recess 11 is provided. Thus, the thickness of the second sound damper 3b at any location other than where the recess 11 is provided represents the aforementioned maximum thickness T2. In contrast, the thickness of the first sound damper 3a where the recess 11 is provided represents the aforementioned minimum thickness T3.

Here, in the present embodiment, the maximum length W2 of the second sound damper 3b (which substantially equals the maximum length thereof in the tire width direction A in the present embodiment) is smaller than the maximum length W1 of the first sound damper 3a (which substantially equals the maximum length thereof in the tire width direction A in the present embodiment). More specifically, the second sound damper 3b of the present embodiment covers only a part of the internal surface 3a2 of the first sound damper 3a, and does not extend beyond the internal surface 3a2 of the first sound damper 3a in the direction along the tire inner surface in the tire widthwise cross-sectional view (see FIG. 3 etc.). In other words, the second sound damper 3b of the present embodiment extends only in the region where the internal surface 3a2 of the first sound damper 3a extends, in the direction along the tire inner surface in the tire widthwise cross-sectional view. The sensor 10 is retained at a position between the internal surface 3a2 of the first sound damper 3a and the opposing surface 3b1 of the second sound damper 3b.

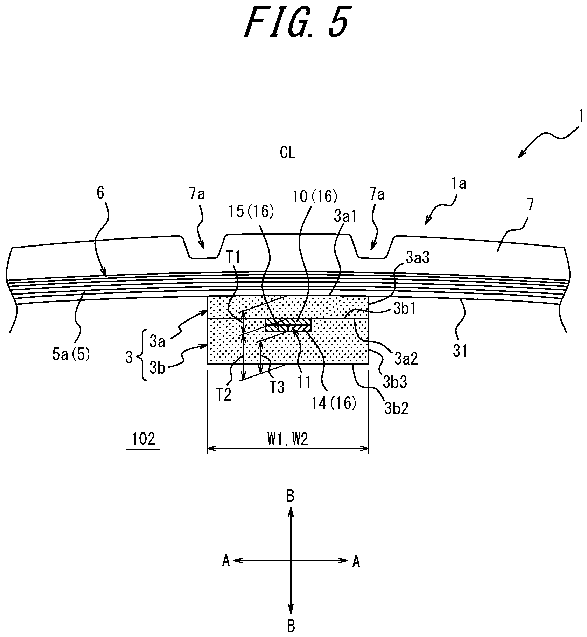

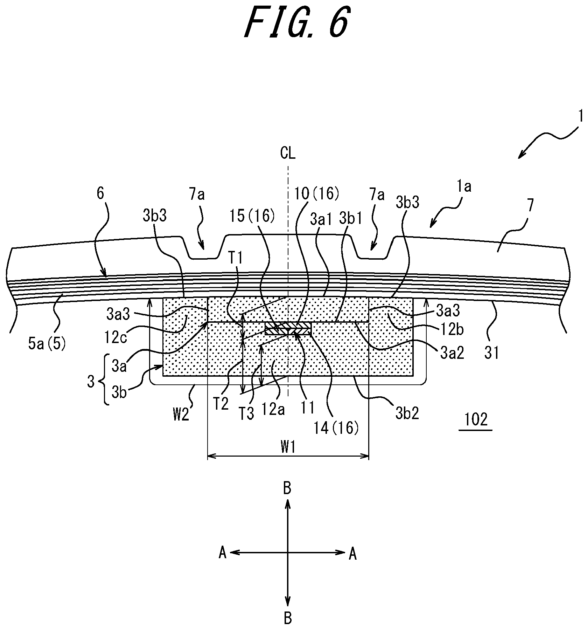

The length relationship of the maximum length W1 of the first sound damper 3a and the maximum length W2 of the second sound damper 3b is not limited to the above-described length relationship of the present embodiment. For example, as in variations illustrated in FIGS. 5 and 6, the maximum length W2 of the second sound damper 3b may be equal to or greater than the maximum length W1 of the first sound damper 3a. FIG. 5 illustrates a configuration in which the maximum length W2 of the second sound damper 3b is substantially equal to the maximum length W1 of the first sound damper 3a. FIG. 6 illustrates a configuration in which the maximum length W2 of the second sound damper 3b is greater than the maximum length W1 of the first sound damper 3a, so that the second sound damper 3b wraps around the edge surfaces 3a3 of the first sound damper 3a.

In other words, the second sound damper 3b illustrated in FIG. 5 covers the internal surface 3a2 of the first sound damper 3a entirely in the tire widthwise cross-sectional view. The sensor 10 and the entire communication device 16 including the sensor 10 are positioned between the internal surface 3a2 of the first sound damper 3a and the opposing surface 3b 1 of the second sound damper 3b, and are retained to at least the first sound damper 3a, thereby being positioned and fixed in this position. In this manner, in the configuration in which the second sound damper 3b covers the internal surface 3a2 of the first sound damper 3a entirely including the position where the sensor 10 is retained in the tire width direction cross-sectional view (see FIG. 5), the cavity resonance reduction characteristic is improved and the second sound damper 3b serves a cover extending over a wider region, so that the sensor 10 is prevented from entering the tire internal space 102 side more effectively, as compared to a configuration in which only the internal surface 3a2 of the first sound damper 3a is covered partially.

Alternatively, the second sound damper 3b illustrated in FIG. 6 covers at least a part of the edge surfaces 3a3 of the first sound damper 3a in the tire widthwise cross-sectional view. In other words, the second sound damper 3b illustrated in FIG. 6 covers not only the entire internal surface 3a2 but also at least a part of the edge surfaces 3a3, in the tire widthwise cross-sectional view. Such a configuration further reduces the area of the surface of the first sound damper 3a exposed to the tire internal space 102, as compared to the configuration in which the second sound damper 3b covers only the entire internal surface 3a2 as illustrated in FIG. 6. Thus, the first sound damper 3a retaining the sensor 10 is protected from a contact with an end of a tire lever upon removal of the tire 1 from the rim 2, such as upon tire replacement, for example. This can prevent possible damages to the first sound damper 3a or detachment of the first sound damper 3a from the tire inner surface, which may be caused by the end of a tire lever contacting the first sound damper 3a.

Additionally, this configuration increases the volume of the second sound damper 3b without increasing the thickness of the second sound damper 3b. The increased volume of the second sound damper 3b can further enhance the cavity resonance reduction characteristic. Preventing the second sound damper 3b from being excessively thick protects the second sound damper 3b from contacts with the end of a tire lever upon removal of the tire 1 from the rim 2, such as upon tire replacement, for example. This can prevent possible damages to the second sound damper 3b which may be caused by the end of the tire lever contacting the second sound damper 3b, in addition to preventing possible damages to the first sound damper 3a, which may be caused by the end of the tire lever contacting the first sound damper 3a.

More specifically, the second sound damper 3b illustrated in FIG. 6 covers the internal surface 3a2 and the edge surfaces 3a3 of the first sound damper 3a entirely, in the tire widthwise cross-sectional view. In other words, the entire tire internal space 102 side of the first sound damper 3a illustrated in FIG. 6 is covered with the second sound damper 3b. The second sound damper 3b illustrated in FIG. 6 contacts the tire inner surface at positions of the both sides of the first sound damper 3a in the direction along the tire inner surface, in the tire widthwise cross-sectional view (see FIG. 6). In the example illustrated in FIG. 6, the edge surfaces 3b3 of the second sound damper 3b contact the tire inner surface. In this manner, by covering the entire tire internal space 102 side of the first sound damper 3a with the second sound damper 3b, any surface of the first sound damper 3a exposed to the tire internal space 102 is eliminated. As a result, the first sound damper 3a is completely covered with the second sound damper 3b. This can even more effectively prevent possible damages to the first sound damper 3a or detachment of the first sound damper 3a from the tire inner surface, which may be caused by the end of a tire lever contacting the first sound damper 3a, such as upon tire replacement, for example.

Furthermore, by covering the entire tire internal space 102 side of the first sound damper 3a with the second sound damper 3b, the volume of the second sound damper 3b can be increased while further reducing the thickness of the second sound damper 3b, as compared to a configuration in which only a part of the tire internal space 102 side of the first sound damper 3a is covered with the second sound damper 3b. The increased volume of the second sound damper 3b can enhance the cavity resonance reduction characteristic. Furthermore, the reduced thickness of the second sound damper 3b protects the second sound damper 3b from a tire lever that may contact the second sound damper 3b. In other words, this can further effectively prevent possible damages to the second sound damper 3b which may be caused by the end of the tire lever contacting the second sound damper 3b, as well as further effectively preventing possible damages to the first sound damper 3a, which may be caused by the end of the tire lever contacting the first sound damper 3a described above.

Note that the second sound damper 3b illustrated in FIG. 6 includes, in the tire widthwise cross-sectional view, a first overlapping section 12a that is overlapped on the internal surface 3a2 of the first sound damper 3a, a second overlapping section 12b that is continuous with one end of the first overlapping section 12a and is overlapped on one edge surface 3a3 of the first sound damper 3a, and a third overlapping section 12c that is continuous with the other end of the first overlapping section 12a and is overlapped on the other edge surface 3a3 of the first sound damper 3a. The communication device 16 including the sensor 10 is retained to the first sound damper 3a, by being positioned between the internal surface 3a2 of the first sound damper 3a and the opposing surface 3b 1 of the second sound damper 3b where the first overlapping section 12a extends, and by being fixed to the internal surface 3a2 of the first sound damper 3a.

Where the first overlapping section 12a extends, the thickness of the second sound damper 3b illustrated in FIG. 6 is defined by the length thereof in the direction orthogonal to the internal surface 3a2 (which equals the length in the orthogonal direction orthogonal to the tire inner surface, and substantially equals the length in the tire radial direction B, in the example of FIG. 6). Where the second overlapping section 12b and the third overlapping section 12c extend, the thickness of the second sound damper 3b illustrated in FIG. 6 is defined by the length thereof in the direction orthogonal to the edge surfaces 3a3 (which substantially equals the length in the tire width direction A in the example of FIG. 6). The minimum thickness T3 of the second sound damper 3b illustrated in FIG. 6 is defined by the thickness thereof where the recess 11 in the first overlapping section 12a extends.

As set forth above, the accelerometer serving as the sensor 10 of the present embodiment is fixed to the first sound damper 3a and the second sound damper 3b. In other words, the accelerometer serving as the sensor 10 of the present embodiment is not only retained to the first sound damper 3a but also retained to the second sound damper 3b. Stated differently, the accelerometer serving as the sensor 10 of the present embodiment is retained to both the first sound damper 3a and the second sound damper 3b. As described above, in a configuration in which the sensor 10 is retained not only to the first sound damper 3a but also to the second sound damper 3b, the sensor 10 is united with the second sound damper 3b. This can prevent the sensor 10 (the entire communication device 16 including the sensor 10 in the present embodiment) from repeatedly colliding with the second sound damper 3b due to impacts, vibrations, and the like while the tire rolls on the road surface. Thus, it is possible to prevent collisions between the sensor 10 and the second sound damper 3b directly or indirectly by means of another member interposed therebetween. This, hence, can prevent any reduction in the detection accuracy of the sensor 10 by an impact of a collision or the like.

More specifically, the communication device 16 including the accelerometer serving as the sensor 10 of the present embodiment is fixed to the internal surface 3a2 of the first sound damper 3a and the opposing surface 3b1 of the second sound damper 3b with an adhesive. Furthermore, the first sound damper 3a of the present embodiment is fixed to the second sound damper 3b at two locations in the direction along the tire inner surface having the sensor 10 interposed therebetween, in the tire widthwise cross-sectional view (see FIG. 3 etc.). More specifically, in the present embodiment, the internal surface 3a2 of the first sound damper 3a and the opposing surface 3b1 of the second sound damper 3b are fixed to each other with an adhesive at the two locations interposing the sensor 10 in the tire width direction A, in the tire widthwise cross-sectional view (see FIG. 3 etc.). Such a configuration can, even when the adhesions between the communication device 16 including the sensor 10 and each of the first sound damper 3a and the second sound damper 3b are compromised, prevent the sensor 10 (the entire communication device 16 including the sensor 10 in the present embodiment) from displaced in a direction along the tire inner surface (which substantially equals the tire width direction A in the present embodiment) more effectively, in the tire widthwise cross-sectional view (see FIG. 3 etc.). Thus, the sensor 10 is prevented from entering the tire cavity 101 even more effectively.

Additionally, each of the first sound damper 3a and the second sound damper 3b illustrated in FIGS. 3, 5, and 6 has a symmetrical shape with respect to the tire equator plane CL. Furthermore, the first sound damper 3a and the second sound damper 3b illustrated in FIGS. 3, 5, and 6 are provided only where the tread inner surface 31 extends, of the tire inner surface. In such a configuration, even when the tire 1 rotates at a high speed, the first sound damper 3a and the second sound damper 3b are pressed against the tread inner surface 31 by the centrifugal force acting outward in the tire radial direction B. This can effectively restrict any displacement of the first sound damper 3a and the second sound damper 3b. In other words, by fixing the first sound damper 3a and the second sound damper 3b on the tread inner surface 31, dislocations of the first sound damper 3a and the second sound damper 3b can be prevented with a smaller fixing force. Furthermore, fixing the first sound damper 3a and second sound damper 3b to the tread inner surface 31 enables the accelerometer serving as the sensor 10 to detect the acceleration in the tire radial direction B acting on the tread inner surface 31. The acceleration in the tire radial direction B acting on the tread inner surface 31 of the tire inner surface can be used to obtain information, such as the extent of wear of the tread outer surface and the conditions of the road surface during driving. In other words, valuable information can be obtained through the accelerometer serving as the sensor 10.

Furthermore, in the examples illustrated in FIGS. 3, 5, and 6, a recess 11 is formed in the first sound damper 3a, and the communication device 16 including the sensor 10 is accommodated in the recess 11. More specifically, the recess 11 is formed in the opposing surface 3a1 of the second sound damper 3b, and the communication device 16 illustrated in FIGS. 3, 5, and 6 is accommodated in the recess 11 in the opposing surface 3a1 of the second sound damper 3b. In other words, the communication device 16 illustrated in FIGS. 3, 5, and 6, is retained to the second sound damper 3b by both being accommodated in the recess 11 and being fixed with an adhesive. The rest of the opposing surface 3b 1 of the second sound damper 3b other than the recess 11 is brought into contact with the internal surface 3a2 of the first sound damper 3a, and is fixed to the internal surface 3a2 of the first sound damper 3a with an adhesive or the like. In this manner, a recess 11 that is formed in at least one of the first sound damper 3a and the second sound damper 3b and is capable of accommodating the sensor 10 (the entire communication device 16 including the sensor 10 in the present embodiment) prevents escape of the sensor 10 from the recess 11, and hence the securement of the sensor 10 can be further improved.

Note that the shape of the recess 11 for accommodating the sensor 10 is not limited to a groove that is wide and shallow, as the ones as illustrated in FIGS. 3, 5, and 6, and the recess 11 may have any of various shapes such as a narrow and deep slit groove, into which a thin sensor 10 or a thin communication device 16 including a sensor 10 can be inserted, for example.

### <<Second Embodiment>>

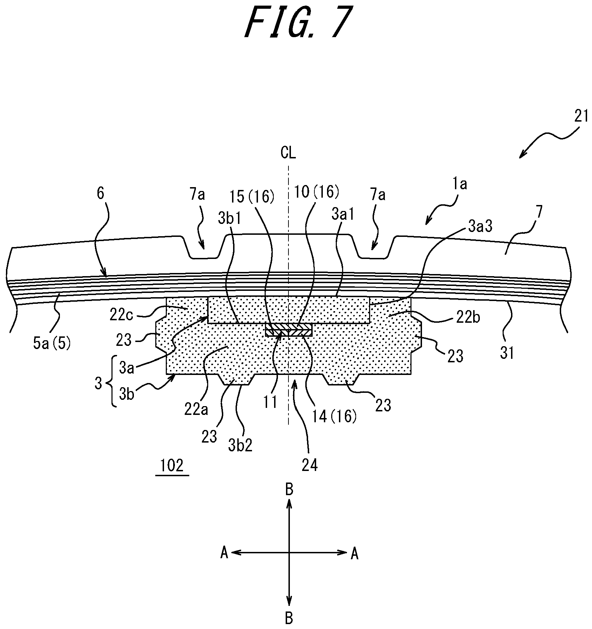

Next, referring to FIG. 7, a pneumatic the tire 21 (hereinafter referred to as the "tire 21") as a second embodiment will be described. FIG. 7 is an enlarged cross-sectional diagram of a tread 1a in an enlarged view of the tire widthwise cross-section solely of the tire 21. Although the tire 21 of the present embodiment differs from the tire 1 of the aforementioned first embodiment in terms of the configuration of a second sound damper 3b, other configurations are the same. Hence, differences from the tire 1 of the first embodiment will be primarily described, and the descriptions on the same configurations are omitted.

In the present embodiment, the surface of the second sound damper 3b on the tire internal space 102 side has irregularities configured from protrusions and recesses. More specifically, the second sound damper 3b of the present embodiment includes, in the tire widthwise cross-sectional view (FIG. 7), a first overlapping section 22a that is overlapped on an internal surface 3a2 of a first sound damper 3a, a second overlapping section 22b that is continuous with one end of the first overlapping section 22a and is overlapped on one edge surface 3a3 of the first sound damper 3a, and a third overlapping section 22c that is continuous with the other end of the first overlapping section 22a and is overlapped on the other edge surface 3a3 of the first sound damper 3a. The surfaces of the second sound damper 3b on the tire internal space 102 side of the present embodiment define free surfaces 3b2, and the free surfaces 3b2 include the surface of the first overlapping section 22a on the inner side in the tire radial direction B, the surface of the second overlapping section 22b on one outer side in the tire width direction A, and the surface of the third overlapping section 22c on the other outer side in the tire width direction A. On the surface of the first overlapping section 22a on the inner side in the tire radial direction B serving as the surface of the second sound damper 3b on the tire internal space 102 side, two protruding ribs 23 as protrusions extending in the tire circumferential direction C (see FIG. 4) and a recessed groove 24 as a recess defined between the two protruding rib 23 are formed. Also on the surface of the second overlapping section 22b on the one outer side in the tire width direction A serving as the surface of the second sound damper 3b on the tire internal space 102 side, one protruding rib 23 is formed. Similarly, also on the surface of the third overlapping section 22c on the other outer side in the tire width direction A serving as the surface of the second sound damper 3b on the tire internal space 102 side, one protruding rib 23 is formed. In this manner, the irregularities formed on the surfaces of the second sound damper 3b on the tire internal space 102 side of the present embodiment are configured from the plurality of protruding ribs 23 and the recessed grooves 24 defined between the plurality of protruding ribs 23. In such a configuration, since sounds are more likely to be diffusely reflected by the irregularities on the surfaces of the second sound damper 3b on the tire internal space 102 side, cavity resonance can be even further reduced. Furthermore, since the surface area of the free surfaces 3b2 of the second sound damper 3b facing the tire internal space 102 is increased, the heat dissipation characteristic from the free surfaces 3b2 of the second sound damper 3b is enhanced. Additionally, the irregularities configured from the plurality of protruding ribs 23 described above and the recessed grooves 24 defined between these plurality of protruding ribs 23 enable irregularities extending in the tire circumferential direction C (see FIG. 4) to be formed with simplified structures.

The four protruding rib 23 of the present embodiment are arranged at intervals along the surface of the first sound damper 3a on the tire internal space 102 side, and each extend in the tire circumferential direction C (see FIG. 4), in the tire widthwise cross-sectional view (see FIG. 7). The present invention, however, is not limited to this configuration, and a plurality of protruding ribs 23 may be arranged at intervals in the tire circumferential direction C (see FIG. 4), and may each extend in the tire width direction A. Alternatively, protrusions may be arranged spaced apart in the tire width direction A and the tire circumferential direction C.

The pneumatic tire of the present invention is not limited to the specific configurations described in the embodiments and variations described above, and various modifications and changes can be made without departing from the scope of the claims.

### INDUSTRIAL APPLICABILITY

The present invention relates to a pneumatic tire.

### REFERENCE SIGNS LIST

1: Pneumatic tire; 1a: Tread; 1b: Side wall; 1c: Bead; 2: Rim; 2a: Rim main body; 2a1: Rim sheet; 2a2: Rim flange; 2b: Disc ; 3: Sound damper; 3a: First sound damper; 3a1: Fixed surface; 3a2: Internal surface; 3a3: Edge surface; 3b: Second sound damper; 3b1: Opposing surface; 3b2: Free surface; 3b3: Edge surface; 4: Bead member; 4a: Bead core; 4b: Bead filler; 5: Carcass; 5a: Carcass ply; 6: Belt; 6a: Inclined belt; 6a1: First inclined belt layer; 6a2: Second inclined belt layer; 6b: Circumferential belt; 6b1: First circumferential belt layer; 6b2: Second circumferential belt layer; 6b3: Third circumferential belt layer; 7: Tread rubber; 7a: Circumferential directional groove; 8: Side rubber; 9: Inner liner; 10: Sensor; 11: Recess; 12a: First overlapping section; 12b: Second overlapping section; 12c: Third overlapping section; 14: Communication unit; 15: Storage unit; 16: Communication device; 21: Pneumatic tire; 22a: First overlapping section; 22b: Second overlapping section; 22c: Third overlapping section; 23: Protruding rib; 24: Recessed groove; 31: Tread inner surface (tire inner surface); 32: Side wall inner surface (tire inner surface); 33: Bead inner surface (tire inner surface); 100: Assembly; 101: Tire cavity; 102: Tire internal space; A: Tire width direction; B: Tire radial direction; C: Tire circumferential direction; P1 and P2: Planes parallel to tire radial direction, intersecting outmost belt ends in width direction of belt; Q: Belt end; T1: Maximum thickness of first sound damper; T2: Maximum thickness of second sound damper; T3: Minimum thickness of first sound damper; W1: Maximum length of first sound damper; W2: Maximum length of second sound damper; and CL: Tire equatorial plane

## Claims

1. A pneumatic tire (1) comprising:
a first sound damper (3 a) fixed to a tire inner surface and being made of a sponge material;
a second sound damper (3b) disposed on a tire internal space (102) side of the first sound damper (3a), and being made of a sponge material; and
a sensor (10) retained to at least the first sound damper (3a), the sensor (10) being configured to detect a displacement of the tire inner surface or a physical quantity calculable based on the displacement of the tire inner surface,
**characterized in that** the first sound damper (3a) has a hardness greater than a hardness of the second sound damper (3b), the "hardness" being defined as a value measured in accordance with the Method A in Section 6.4 of the test methods described in "Hardness Tests" in Section 6 of JIS K6400-2 (2012).

2. The pneumatic tire (1) according to claim 1, wherein the sensor (10) is positioned between the first sound damper (3a) and the second sound damper (3b).

3. The pneumatic tire (1) according to claim 2, wherein
the second sound damper (3b) covers at least a part of an internal surface (3a2) of the first sound damper (3a) in a tire widthwise cross-sectional view, the internal surface (3a2) being opposite to a fixed surface (3a1) that is fixed to the tire inner surface, and
the sensor (10) is retained to at least the first sound damper (3a) between the internal surface (3a2) of the first sound damper (3a) and the second sound damper (3b).

4. The pneumatic tire (1) according to claim 3, wherein a maximum thickness of the first sound damper (3a) is equal to or smaller than a minimum thickness of the second sound damper (3b) in the tire widthwise cross-sectional view.

5. The pneumatic tire (1) according to claim 3 or 4, wherein the second sound damper (3b) covers the internal surface (3a2) of the first sound damper (3a) entirely in the tire widthwise cross-sectional view.

6. The pneumatic tire (1) according to claim 5, wherein the second sound damper (3b) covers at least a part of edge surfaces (3a3) of the first sound damper (3a), the edge surfaces (3a3) being continuous with the internal surface (3a2) of the first sound damper (3a) and being located on two sides in a direction along the tire inner surface, in the tire widthwise cross-sectional view.

7. The pneumatic tire (1) according to claim 6, wherein the second sound damper (3b) covers the internal surface (3a2) and the edge surfaces (3a3) of the first sound damper (3a) entirely, in the tire widthwise cross-sectional view.

8. The pneumatic tire (1) according to any one of claims 3 to 7, wherein the first sound damper (3a) is fixed to the second sound damper (3b) at two locations in the direction along the tire inner surface having the sensor (10) interposed therebetween, in the tire widthwise cross-sectional view.

9. The pneumatic tire (1) according to any one of claims 1 to 8, wherein the first sound damper (3a) and the second sound damper (3b) extend along an entire tire circumference.

10. The pneumatic tire (1) according to any one of claims 1 to 9, wherein a surface of the second sound damper (3b) on the tire internal space (102) side is provided with irregularities.

11. The pneumatic tire (1) according to claim 10, wherein the irregularities are configured from a plurality of protruding ribs (23) extending in a tire circumferential direction and a recessed groove (24) defined between the plurality of protruding ribs (23).

12. The pneumatic tire (1) according to any one of claims 1 to 11, wherein the sensor (10) is retained to both the first sound damper (3a) and the second sound damper (3b).

13. The pneumatic tire (1) according to claim 12, wherein the sensor (10) is included in a communication device (16), the communication device (16) comprising a communicating unit (14) wirelessly communicative to an external device external to the tire.

14. The pneumatic tire (1) according to claim 13, wherein the communication device (16) further comprises a storage unit (15) that is capable of storing a detected value detected by the sensor (10) or a calculated value calculated based on the detected value.

15. The pneumatic tire (1) according to any of claims 1 to 14, wherein the sensor (10) is an accelerometer.

## Patentansprüche

1. Luftreifen (1), der Folgendes umfasst:
einen ersten Geräuschdämpfer (3a), der an einer Reifeninnenfläche befestigt ist und aus einem Schaumstoffmaterial hergestellt ist,
einen zweiten Geräuschdämpfer (3b), der auf einer Reifeninnenraum- (102) Seite des ersten Geräuschdämpfers (3a) angeordnet ist und aus einem Schaumstoffmaterial hergestellt ist, und
einen Sensor (10), der an mindestens dem ersten Geräuschdämpfer (3a) festgehalten wird, wobei der Sensor (10) dafür konfiguriert ist, eine Verschiebung der Reifeninnenfläche oder eine physikalische Größe, die auf Grundlage der Verschiebung der Reifeninnenfläche berechenbar ist, zu erfassen,
**dadurch gekennzeichnet, dass** der erste Geräuschdämpfer (3a) eine Härte, größer als eine Härte des zweiten Geräuschdämpfers (3b), aufweist, wobei die "Härte" definiert ist als ein Wert, der entsprechend dem Verfahren A in Abschnitt 6.4 der Prüfverfahren gemessen wird, die in "Härteprüfungen" in Abschnitt 6 des JIS K6400-2 (2012) beschrieben werden.

2. Luftreifen (1) nach Anspruch 1, wobei der Sensor (10) zwischen dem ersten Geräuschdämpfer (3a) und dem zweiten Geräuschdämpfer (3b) angeordnet ist.

3. Luftreifen (1) nach Anspruch 2, wobei
der zweite Geräuschdämpfer (3b) in einer Reifenbreiten-Querschnittsansicht mindestens einen Teil einer Innenfläche (3a2) des ersten Geräuschdämpfers (3a) bedeckt, wobei die Innenfläche (3a2) zu einer befestigten Fläche (3a1) entgegengesetzt ist, die an der Reifeninnenfläche befestigt ist, und
der Sensor (10) an mindestens dem ersten Geräuschdämpfer (3a) zwischen der Innenfläche (3a2) des ersten Geräuschdämpfers (3a) und dem zweiten Geräuschdämpfer (3b) festgehalten wird.

4. Luftreifen (1) nach Anspruch 3, wobei eine maximale Dicke des ersten Geräuschdämpfers (3a) in der Reifenbreiten-Querschnittsansicht gleich einer minimalen Dicke des zweiten Geräuschdämpfers (3b) oder kleiner als dieselbe ist.

5. Luftreifen (1) nach Anspruch 3 oder 4, wobei der zweite Geräuschdämpfer (3b) in der Reifenbreiten-Querschnittsansicht die Innenfläche (3a2) des ersten Geräuschdämpfers (3a) vollständig bedeckt.

6. Luftreifen (1) nach Anspruch 5, wobei der zweite Geräuschdämpfer (3b) mindestens einen Teil von Kantenflächen (3a3) des ersten Geräuschdämpfers (3a) bedeckt, wobei die Kantenflächen (3a3) mit der Innenfläche (3a2) des ersten Geräuschdämpfers (3a) durchgehend sind und, in der Reifenbreiten-Querschnittsansicht, auf zwei Seiten in einer Richtung entlang der Reifeninnenfläche angeordnet sind.

7. Luftreifen (1) nach Anspruch 6, wobei der zweite Geräuschdämpfer (3b), in der Reifenbreiten-Querschnittsansicht, die Innenfläche (3a2) und die Kantenflächen (3a3) des ersten Geräuschdämpfers (3a) vollständig bedeckt.

8. Luftreifen (1) nach einem der Ansprüche 3 bis 7, wobei der erste Geräuschdämpfer (3a) an zwei Positionen in der Richtung entlang der Reifeninnenfläche an dem zweiten Geräuschdämpfer (3b) befestigt ist, wobei der Sensor (10), in der Reifenbreiten-Querschnittsansicht, zwischen denselben eingefügt ist.

9. Luftreifen (1) nach einem der Ansprüche 1 bis 8, wobei sich der erste Geräuschdämpfer (3a) und der zweite Geräuschdämpfer (3b) entlang eines gesamten Reifenumfangs erstrecken.

10. Luftreifen (1) nach einem der Ansprüche 1 bis 9, wobei eine Oberfläche des zweiten Geräuschdämpfers (3b) auf der Reifeninnenraum- (102) Seite mit Unregelmäßigkeiten versehen ist.

11. Luftreifen (1) nach Anspruch 10, wobei die Unregelmäßigkeiten aus einer Vielzahl von vorspringenden Rippen (23), die in einer Reifenumfangsrichtung vorspringen, und einer vertieften Rille (24), die zwischen der Vielzahl von vorspringenden Rippen (23) definiert ist, konfiguriert sind.

12. Luftreifen (1) nach einem der Ansprüche 1 bis 11, wobei der Sensor (10) an sowohl dem ersten Geräuschdämpfer (3a) als auch dem zweiten Geräuschdämpfer (3b) festgehalten wird.

13. Luftreifen (1) nach Anspruch 12, wobei der Sensor (10) in einer Kommunikationseinrichtung (16) eingeschlossen ist, wobei die Kommunikationseinrichtung (16) eine Kommunikationseinheit (14) umfasst, die mit einer externen Einrichtung außerhalb des Reifens drahtlos kommunikationsfähig ist.

14. Luftreifen (1) nach Anspruch 13, wobei die Kommunikationseinrichtung (16) ferner eine Speichereinheit (15) umfasst, die zum Speichern eines erfassten Wertes, der durch den Sensor (10) erfasst wird, oder eines berechneten Wertes, der auf Grundlage des erfassten Wertes berechnet wird, in der Lage ist.

15. Luftreifen (1) nach einem der Ansprüche 1 bis 14, wobei der Sensor (10) ein Beschleunigungsmesser ist.

## Revendications

1. Bandage pneumatique (1), comprenant :
un premier amortisseur de bruit (3a) fixé sur une surface interne du bandage pneumatique et fabriqué à partir d'un matériau spongieux ;
un deuxième amortisseur de bruit (3b) disposé sur un côté d'un espace interne (102) du bandage pneumatique du premier amortisseur de bruit (3a) et fabriqué à partir d'un matériau spongieux ; et
un capteur (10) retenu sur au moins le premier amortisseur de bruit (3a), le capteur (10) étant configuré pour détecter un déplacement de la surface interne du bandage pneumatique ou une quantité physique pouvant être calculée sur la base du déplacement de la surface interne du bandage pneumatique ;
**caractérisé en ce que** le premier amortisseur de bruit (3a) présente une dureté supérieure à une dureté du deuxième amortisseur de bruit (3b), la « dureté » étant définie comme une valeur mesurée selon la méthode A dans la section 6.4 des méthodes d'essai décrites dans « Tests de Dureté » dans la section 6 de JIS K6400-2 (2012).

2. Bandage pneumatique (1) selon la revendication 1, dans lequel le capteur (10) est positionné entre le premier amortisseur de bruit (3a) et le deuxième amortisseur de bruit (3b).

3. Bandage pneumatique (1), selon la revendication 2, dans lequel :
le deuxième amortisseur de bruit (3b) recouvre au moins une partie d'une surface interne (3a2) du premier amortisseur de bruit (3a), dans une vue en coupe dans le sens de la largeur du bandage pneumatique, la surface interne (3a2) étant opposée à une surface fixe (3a1) qui est fixée sur la surface interne du bandage pneumatique ; et
le capteur (10) est retenu sur au moins le premier amortisseur de bruit (3a) entre la surface interne (3a2) du premier amortisseur de bruit (3a) et le deuxième amortisseur de bruit (3b).

4. Bandage pneumatique (1) selon la revendication 3, dans lequel une épaisseur maximale du premier amortisseur de bruit (3a) est égale ou inférieure à une épaisseur minimale du deuxième amortisseur de bruit (3b) dans la vue en coupe dans le sens de la largeur du bandage pneumatique.

5. Bandage pneumatique (1) selon la revendication 3 ou 4, dans lequel le deuxième amortisseur de bruit (3b) recouvre l'ensemble de la surface interne (3a2) du premier amortisseur de bruit (3a) dans la vue en coupe dans le sens de la largeur du bandage pneumatique.

6. Bandage pneumatique (1) selon la revendication 5, dans lequel le deuxième amortisseur de bruit (3b) recouvre au moins une partie des surfaces de bordure (3a3) du premier amortisseur de bruit (3a), les surfaces de bordure (3a3) s'étendant en continu avec la surface interne (3a2) du premier amortisseur de bruit (3a) et étant disposées sur deux côtés, dans une direction allant le long de la surface interne du bandage pneumatique, dans la vue en coupe dans le sens de la largeur du bandage pneumatique.

7. Bandage pneumatique (1) selon la revendication 6, dans lequel le deuxième amortisseur de bruit (3b) recouvre entièrement la surface interne (3a2) et les surfaces de bordure (3a3) du premier amortisseur de bruit (3a), dans la vue en coupe dans le sens de la largeur du bandage pneumatique.

8. Bandage pneumatique (1) selon l'une quelconque des revendications 3 à 7, dans lequel le premier amortisseur de bruit (3a) est fixé sur le deuxième amortisseur de bruit (3b) au niveau de deux emplacements, dans la direction allant le long de la surface interne du bandage pneumatique, comportant le capteur (10) agencé entre eux, dans la vue en coupe dans le sens de la largeur du bandage pneumatique.

9. Bandage pneumatique (1) selon l'une quelconque des revendications 1 à 8, dans lequel le premier amortisseur de bruit (3a) et le deuxième amortisseur de bruit (3b) s'étendent le long d'une circonférence entière du bandage pneumatique.

10. Bandage pneumatique (1) selon l'une quelconque des revendications 1 à 9, dans lequel une surface du deuxième amortisseur de bruit (3b) sur le côté de l'espace interne du bandage pneumatique (102) comporte des irrégularités.

11. Bandage pneumatique (1) selon la revendication 10, dans lequel les irrégularités sont configurées à partir d'une pluralité de nervures en saillie (23) s'étendant dans une direction circonférentielle du bandage pneumatique, et d'une rainure évidée (24) définie entre la pluralité de nervures en saillie (23).

12. Bandage pneumatique (1) selon l'une quelconque des revendications 1 à 11, dans lequel le capteur (10) est retenu à la fois sur le premier amortisseur de bruit (3a) et le deuxième amortisseur de bruit (3b).

13. Bandage pneumatique (1) selon la revendication 12, dans lequel le capteur (10) est inclus dans un dispositif de communication (16), le dispositif de communication (16) comprenant une unité de communication (14) communiquant sans fil avec un dispositif externe, extérieur au bandage pneumatique.

14. Bandage pneumatique (1) selon la revendication 13, dans lequel le dispositif de communication (16) comprend en outre une unité de stockage (15) qui est capable de stocker une valeur détectée, détectée par le capteur (10), ou une valeur calculée, calculée sur la base de la valeur détectée.

15. Bandage pneumatique (1) selon l'une quelconque des revendications 1 à 14, dans lequel le capteur (10) est un accéléromètre.
